# EUROPEAN PATENT APPLICATION

(11) **EP 4 596 757 A1**
(43) Date of publication of application: **06.08.2025**
(21) Application number: 24307037.2
(22) Date of filing: 05.12.2024
(51) Int. Cl.: C25B 1/04, C25B 9/70, C25B 9/77, C25B 15/02, C25B 15/023, C25B 15/08

(54) **HYDROGEN PRODUCTION FACILITY AND METHOD**

(30) Priority: 31.01.2024 FR 2400933; 14.10.2024 EP 24306686
(71) Applicant: Rely S.A., 1210 Brussels (BE); John Cockerill Hydrogen Belgium SA, 4100 Seraing (BE); Technip Energies France, 92741 Nanterre Cedex (FR)
(72) Inventor: DE SORBIER, Thibault, 92741 Nanterre Cedex (FR); LEYMARIOS, Gael, 92741 Nanterre Cedex (FR); MAZINGAND, Hervé, 92741 Nanterre Cedex (FR); GODDIN, Christophe, 1210 Brussels (BE)
(74) Representative: Edson, Russell Gregory

(57) **Abstract**

A hydrogen production facility is disclosed, comprising a plurality of electrolyser stacks arranged for electrolyzing water using an electrolyte and for generating at least a hydrogen-aqueous solution mixture; and a hydrogen separator arrangement for producing a flow of hydrogen from the hydrogen-aqueous solution mixture; wherein the hydrogen separator arrangement comprises a plurality of first stage hydrogen collector separators, the first stage hydrogen collector separators being fluidly coupled to a respective sub-set of the plurality of electrolyser stacks; and wherein the plurality of first stage hydrogen collector separators are fluidly coupled to a downstream hydrogen buffer vessel. A related method is further disclosed.

## Description

### Technical Field

The present disclosure relates to a hydrogen production system. In particular the disclosure relates to hydrogen production through electrolysis.

### Background

Hydrogen can be an alternative energy source to hydrocarbons because it is an easily storable source of energy as compared to electricity, and its oxidation releases a very high amount of energy. Hydrogen can be produced using electrolysis to separate water into hydrogen and oxygen. Produced hydrogen can be green hydrogen and can be used as a clean energy source, transported easily, and stored easily. Electrolysis can involve circulating electrolyte on different sides of membranes of electrolyser cells.

The present disclosure provides improvements to known methods and facilities for hydrogen production by electrolysis.

### Statements

According to an aspect, there is provided a hydrogen production facility comprising one or more of the following features: a plurality of electrolyser stacks arranged for electrolyzing water using an electrolyte and for generating at least a hydrogen-aqueous solution mixture; and a hydrogen separator arrangement for producing a flow of hydrogen from the hydrogen-aqueous solution mixture; wherein the hydrogen separator arrangement comprises a plurality of first stage hydrogen collector separators, the first stage hydrogen collector separators being fluidly coupled to a respective sub-set of the plurality of electrolyser stacks; and wherein the plurality of first stage hydrogen collector separators are fluidly coupled to a downstream hydrogen buffer vessel.

One or more, or two or more, or each of the plurality of first stage hydrogen collector separators may comprise a gas outlet fluidly coupled to the buffer vessel via a gas transfer pipe and a liquid outlet fluidly coupled to the buffer vessel via a liquid transfer pipe.

The hydrogen buffer vessel may be arranged relative to the plurality of first stage hydrogen collector separators such that during operation of the hydrogen production facility, a gas-liquid interface level in the buffer vessel is substantially the same as a gas-liquid interface level in the plurality of first stage hydrogen collector separators.

The hydrogen buffer vessel may be arranged and/or positioned to maintain the gas-liquid interface level within a vertical height of the plurality of first stage hydrogen collector separators.

The hydrogen buffer vessel may be arranged such that a vertical mid-point of the buffer vessel is substantially aligned with a vertical mid-point of the plurality of first stage hydrogen collector separators.

The hydrogen buffer vessel is optionally arranged such that a base or a top of the hydrogen buffer vessel is vertically aligned with a base or a top of at least one of the plurality of first stage hydrogen collector separators.

One or more, or two or more, or each of, the plurality of first stage hydrogen collector separators may comprise a collector line fluidly coupled with an outlet of one or more of the respective sub-set of the plurality of electrolyser stacks.

One or more, or two or more, or each of, the plurality of first stage hydrogen collector separators may comprise a gas-liquid separation device. The gas-liquid separation devices may be optionally configured as a gravity separator.

The hydrogen separator arrangement may comprise one or more hydrogen coalescing devices.

One or more hydrogen coalescing devices may be positioned upstream of at least one of the first stage hydrogen collector separators between the plurality of electrolyser stacks and the plurality of first stage hydrogen collector separators.

One or more hydrogen coalescing devices may be positioned downstream of the first stage hydrogen collector separators between the plurality of first stage hydrogen collector separators and the hydrogen buffer vessel.

One or more hydrogen coalescing devices may be positioned downstream of the hydrogen buffer vessel.

One or more hydrogen coalescing devices may be integrated with at least one of the plurality of first stage hydrogen collector separators.

One or more hydrogen coalescing devices may be provided adjacent to an external wall of the respective first stage hydrogen collector separator.

The hydrogen buffer vessel may comprise a gas-liquid separation device and/or one or more hydrogen coalescing devices.

The coalescing device may be at least one of: a membrane-type coalescer, an ultrasonic coalescer, or a centrifugal coalescer.

The plurality of electrolyser stacks may be further configured to generate an oxygen-aqueous solution mixture. The hydrogen production facility may further comprise an oxygen separator arrangement for producing a flow of hydrogen from the oxygen-aqueous solution mixture. The oxygen separator arrangement may comprise a plurality of first stage oxygen collector separators. The first stage oxygen collector separators may be fluidly coupled to a respective sub-set of the plurality of electrolyser stacks. The plurality of first stage oxygen collector separators may be fluidly coupled to a downstream oxygen buffer vessel so as to control liquid level in the plurality of first stage oxygen collector separators.

Any or all of the features described in relation to the hydrogen separator arrangement may be applied to the oxygen separator arrangement.

The hydrogen separator arrangement and the oxygen separator arrangement may be coupled using a pressure balancing line to balance pressure between the hydrogen separator arrangement and the oxygen separator arrangement.

The pressure balancing line may optionally extend between the hydrogen buffer vessel and the oxygen buffer vessel.

One or more hydrogen coalescing devices may be provided adjacent an external wall of the plurality of first stage hydrogen collector separators. One or more oxygen coalescing devices may be provided adjacent an external wall of the plurality of first stage oxygen collector separators.

The coalescing device or devices may be configured to recover at least part of the electrolyte.

The hydrogen-aqueous solution mixture may comprise at least hydrogen and the electrolyte. The hydrogen coalescing device may be configured to recover at least part of the electrolyte from the hydrogen-aqueous solution mixture.

The oxygen-aqueous solution mixture may comprise at least oxygen and the electrolyte. The oxygen coalescing device may be configured to recover at least part of the electrolyte from the oxygen-aqueous solution mixture.

The pressure balancing line may extend between a liquid outlet of the hydrogen buffer vessel and a liquid outlet of the oxygen buffer vessel.

The hydrogen production facility may further comprise a recycle line configured to recycle the electrolyte from the hydrogen separator arrangement and/or the oxygen separator arrangement to the plurality of electrolyser stacks.

The recycle line may extend from the hydrogen buffer vessel and/or from the oxygen buffer vessel to the plurality of electrolyser stacks.

The recycle line may be connected to or mutualized with the pressure balancing line such that electrolyte in the pressure balancing line is recyclable to the plurality of electrolyser stacks via the recycle line.

According to a further aspect, there is provided a method comprising one or more of the following steps: generating a hydrogen-aqueous solution mixture using a plurality of electrolyser stacks to electrolyze water using an electrolyte; and producing a flow of hydrogen from the hydrogen-aqueous solution mixture using a hydrogen separator arrangement; wherein the hydrogen separator arrangement comprises a plurality of first stage hydrogen collector separators, the first stage hydrogen collector separators being fluidly coupled to a respective sub-set of the plurality of electrolyser stacks; and wherein the method further comprises controlling a liquid level in the plurality of first stage hydrogen collector separators using a downstream hydrogen buffer vessel fluidly coupled to the plurality of first stage hydrogen collector separators.

Any or all of the features described in relation to the first aspect may be applied to the method above.

According to an aspect of the disclosure, there is provided a hydrogen production facility comprising one or more of the following features: a plurality of electrolysers to electrolyze water using an electrolyte and generate a hydrogen-aqueous solution mixture, the plurality of electrolysers comprising a plurality of membranes; at least one gas-liquid separation device to produce a flow of hydrogen from the hydrogen-aqueous solution mixture; and a hydrogen separator and an oxygen separator coupled to the hydrogen separator using a line to balance pressure between the oxygen separator and the hydrogen separator and to prevent a pressure differential across the plurality of membranes; and/or a hydrogen aqueous-solution-recovering device and an oxygen aqueous-solution-recovering device coupled to the hydrogen aqueous-solution-recovering device using a line to balance pressure between the oxygen aqueous-solution-recovering device and the hydrogen aqueous-solution-recovering device and to prevent a pressure differential across the plurality of membranes; and/or a hydrogen coalescer and an oxygen coalescer coupled to the hydrogen separator using a line to balance pressure between the oxygen coalescer and the hydrogen coalescer and to prevent a pressure differential across the plurality of membranes.

The line to balance pressure between the oxygen separator and the hydrogen separator may be a pressure balancing line.

The line to balance pressure between the oxygen separator and the hydrogen separator may be positionable to couple at a lower portion of one or more of the oxygen separator and the hydrogen separator.

Either or both of the oxygen separator and the hydrogen separator may comprise:
a primary separator to remove at least some bubbles from the electrolyte; and
a coalescer positioned downstream to the primary separator.

The coalescer may be at least one of a membrane-type coalescer, an ultrasonic coalescer, or a centrifugal coalescer.

The primary separator may be a vertical primary separator vessel.

The hydrogen production facility may further comprise a collector line mutualized with the primary separator.

According to an aspect of the disclosure there is provided a method comprising one or more of the following features: preventing a pressure differential across at least one membrane of an electrolyzer for a hydrogen production facility by: using a line to couple a hydrogen separator with an oxygen separator, and/or using a line to couple a hydrogen aqueous-solution-recovering device to an oxygen an aqueous-solution-recovering device, and/or using a line to couple a hydrogen coalescer to an oxygen coalescer; and producing, by at least one gas-liquid separation device, a flow of hydrogen from a hydrogen-aqueous solution mixture from the electrolyzer.

The line to balance pressure between the oxygen separator and the hydrogen separator may be a pressure balancing line.

### Brief Description of the Drawings

One or more examples will now be described, by way of example only, with reference to the accompanying drawings, in which:
Figure 1 shows a schematic block diagram of a hydrogen production facility according to an example of the disclosure;
Figure 2 shows a schematic block diagram of a hydrogen production facility according to an example of the disclosure;
Figure 3 shows a schematic block diagram of a hydrogen separator arrangement or an oxygen separator arrangement according to an example of the disclosure;
Figure 4 shows a schematic block diagram of a hydrogen separator arrangement or an oxygen separator arrangement according to an example of the disclosure;
Figure 5 shows a schematic block diagram of a hydrogen separator arrangement or an oxygen separator arrangement according to an example of the disclosure;
Figure 6 shows a schematic coalescer device according to an example of the disclosure;
Figure 7 shows a schematic coalescer device according to an example of the disclosure;
Figure 8 shows a schematic block diagram of a hydrogen production facility according to an example of the disclosure;
Figure 9 shows a schematic block diagram of a hydrogen production facility according to an example of the disclosure;
Figure 10 shows a schematic block diagram of a hydrogen production facility according to an example of the disclosure;
Figure 11 shows a schematic block diagram of a hydrogen production facility according to an example of the disclosure;
Figure 12 shows a schematic block diagram of a hydrogen production facility according to an example of the disclosure;
Figure 13 shows a schematic of a method.

### Detailed Description

The inventors have identified that pressure management in electrolysis systems is important. In particular, a membrane within an electrolyser cell may be sensitive to pressure differentials between the sides of the membrane, which may result in a membrane rupture, leakage or a degradation of performance. As an example, Alkaline electrolysis involves circulating electrolyte on both sides of membranes of electrolysers. Gases produced can be carried by the electrolyte and can be separated to recover hydrogen and oxygen in respective separation devices. An electrolyser can include multiple electrolysis cells, dedicated circuits for collecting the electrolyte, gas-liquid separation devices, and electrolyte filtering, pumping and cooling devices. Upscaling electrolysis plants can involve installing several electrolysis stacks in parallel. In these conditions, the electrolyte circulation/separation system can be mutualized for both economic and safety reasons. Mutualization can result in managing electrolyte circulation globally through longer and more complex pipeline networks, leading to complex flow behaviour that may result in slug flow-regime. Slugs should be avoided because of the erratic changes in pressure that their presence can generate at the outlet of the cell stacks. Pressure variations, between both sides of the cells' stack membranes, can be harmful to the membrane and membrane related equipment inside the stacks that separate hydrogen-rich electrolyte and oxygen-rich electrolyte.

In addition, the separators of both electrolyte loops can operate at the same or similar operating pressures, and the pressure can be controlled in the gas phase of the separators. Unexpected depressurization or overpressure of one separator compared to the second can lead to high a pressure differential through the electrolysis stack, which can lead to leakage in the system, for example hydrogen to oxygen or oxygen to hydrogen leakage, and put at risk the integrity of the membranes inside the stack.

Certain aspects and features of the present disclosure relate to separators for use in an electrochemical hydrogen production system, such as mutualized large-scale electrochemical hydrogen production systems. The separator system can be used to mitigate membrane damage due to excess differential pressures. For example, the separator system can be provided with a set of pressure balancing safeguarding features to accommodate membrane frailness, taking into account the additional constraints of the electrolyte-purifying equipment as well.

Certain aspects and features of the present disclosure provide systems and methods which enable modularisation of the system. Certain aspects enable elements of the system to be produced in smaller modular parts, whilst providing improved efficiency of recovery of gases from electrolyte. Certain aspects enable the system to have smaller modular parts, whilst accommodating pressure and volume variations which may be experienced during operation of the system, in particular during a start-up and/or shut-down phase of the system. While reference may be made in the following description to features applying to or being connected to 'each' of another item or feature, the term 'each' may be applied to the entirety of a plurality of features or elements, or to a sub-set of such a plurality of features or elements. Examples described in the following description are envisaged in which the term 'each' is replaced with 'one or more' of the relevant item or feature, or 'a plurality' of that item(s) or feature(s).

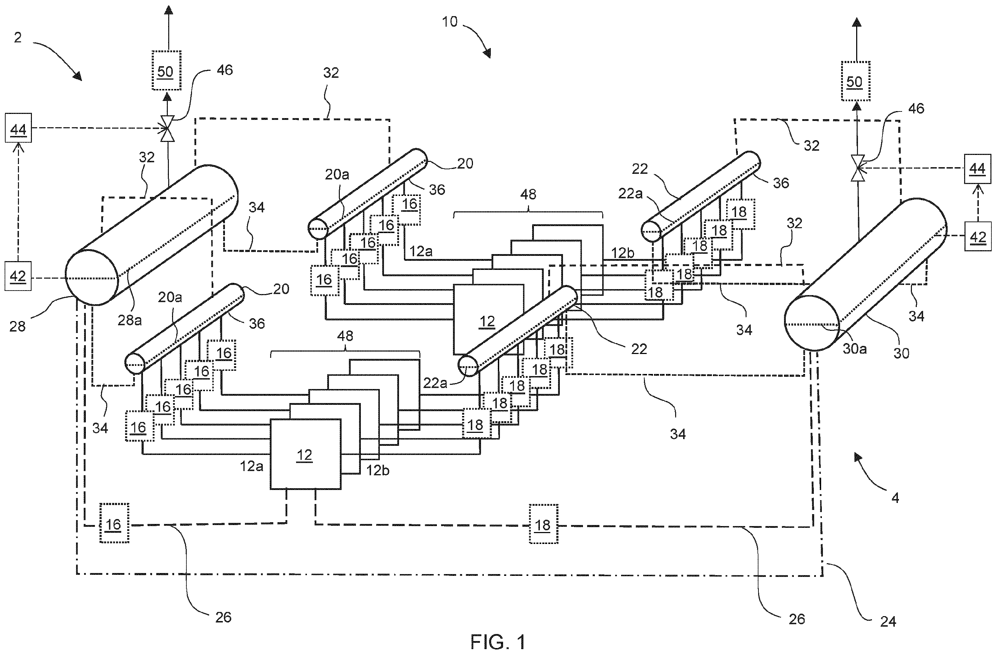

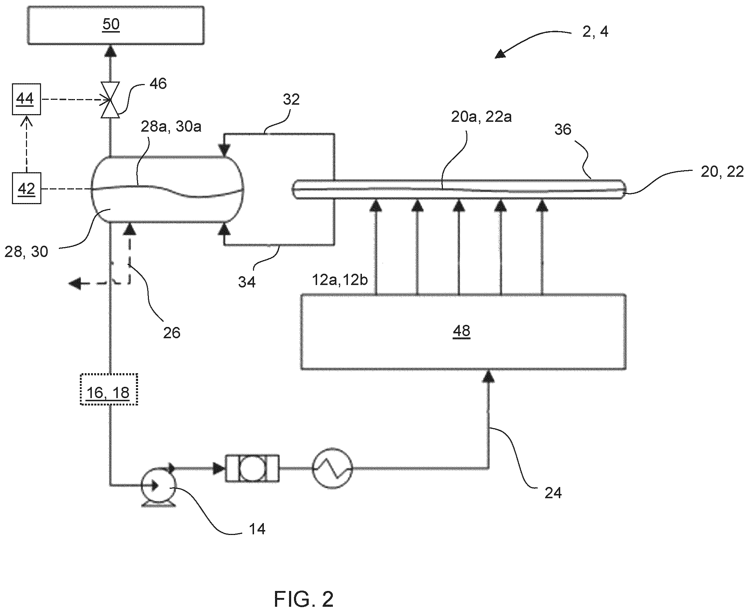

Figure 1 indicates a schematic block diagram of a hydrogen production facility 10 or system 10. The production facility includes a plurality of electrolyser stacks 12. The plurality of electrolyser stacks 12 can each include a plurality of electrolyser cells, and each may have an anode, a cathode and a membrane (not shown). The one or more membranes may separate the oxygen side of the system from the hydrogen side of the system. The plurality of electrolyser stacks 12 may be arranged into sub-sets 48. In this way, the hydrogen production facility 10 includes a plurality of sub-sets 48 of electrolyser stacks 12. The electrolyser stacks 12 are configured to electrolyze water using an electrolyte to generate a hydrogen-aqueous solution mixture. The hydrogen-aqueous solution mixture includes at least hydrogen and the electrolyte. The hydrogen may be in the gas phase, while the electrolyte may be in the liquid or aqueous phase. The electrolyser stacks 12 can generate an oxygen-aqueous solution mixture. The oxygen-aqueous solution mixture includes at least oxygen and the electrolyte. The oxygen may be in the gas phase, while the electrolyte may be in the liquid or aqueous phase. The hydrogen-aqueous mixture may be generated at a first outlet 12a of each of the plurality of electrolyser stacks 12. The first outlet 12a may be proximal and/or in fluid communication with the cathode of each electrolyser cell. The oxygen-aqueous mixture may be generated at a second outlet 12b of the respective electrolyser stacks 12. The second outlet 12b may be proximal and/or in fluid communication with the anode of one or more of the electrolyser cells. The facility 10 may include one or more pumps 14 (see Figure 2) to drive fluid around the facility 10.

The hydrogen production facility 10 includes a hydrogen separator arrangement 2 for producing a flow of hydrogen from the hydrogen-aqueous solution mixture at the first outlet 12a of each electrolyser stack 12. The hydrogen separator arrangement 2 includes a plurality of first stage hydrogen collector separators 20. The first stage hydrogen collector separators 20 may be in the form of a hydrogen recovery vessel that defines an internal volume in which a separation of the gaseous hydrogen and the electrolyte takes place. The first stage hydrogen collector separators 20 are fluidly coupled to a respective sub-set 48 of the plurality of electrolyser stacks 12. Put another way, one hydrogen collector separator 20 may be provided fluidly coupled to a group 48 of electrolyser stacks 12. In this way, a single hydrogen collector separator 20 is configured for receiving flow from a plurality of electrolyser stacks 12.

The second outlet 12b of the electrolyser stacks 12 may be directed outside the facility 10 in some arrangements, for further processing. In certain arrangements, the hydrogen production facility 10 includes an oxygen separator arrangement 4 for producing a flow of oxygen from the oxygen-aqueous solution mixture. It will be appreciated that the oxygen separator arrangement 4 may be arranged and configured substantially the same as the hydrogen separator arrangement 2, with the primary difference being the feed (oxygen-aqueous solution mixture) and the target output (oxygen). Any of the functional components described in relation to the hydrogen separator 2 may be incorporated in the same manner in the oxygen separator arrangement 4. The oxygen separator arrangement 4 includes a plurality of first stage oxygen collector separators 22, each being fluidly coupled to a respective sub-set 48 of the plurality of electrolyser stacks 12. The first stage oxygen collector separators 22 may be substantially the same as the first stage hydrogen collector separators 20.

In Figure 1, ten electrolyser stacks 12, two hydrogen collector separators 20 and two oxygen collector separators 22 are indicated. In this arrangement, a sub-set 48 of five electrolyser stacks 12 are coupled to one of the hydrogen collector separators 20 and to one of the oxygen collector separators 22 and another sub-set 48 of the remaining five electrolyser stacks 12 are coupled to the other one of the hydrogen collector separators 20 and the other one of the oxygen collector separators 22. It will be understood that a different number of electrolyser stacks 12 and collector separators 20, 22 may be provided, and a different number of electrolyser stacks 12 per collector separator 20, 22 may be provided.

Figure 2 shows a hydrogen separator arrangement 2 or an oxygen separator arrangement 4 having just one sub-set 48 of electrolyser stacks 12 coupled to one first stage collector separator 20, 22 for ease of description of the elements of the system. It will be understood that when the arrangement of Figure 2 is implemented as described in relation to Figure 1, there may be multiple hydrogen collector separators 20, each coupled to a sub-set 48 having multiple electrolyser stacks 12. In addition, a plurality of oxygen collector separators 22 may be provided, each coupled to a sub-set 48 having multiple electrolyser stacks 12.

In certain arrangements, the first stage hydrogen collector separators 20 each have a plurality of inlets for coupling to the plurality of first outlets 12a of the sub-set 48 of electrolyser stacks 12. In alternative arrangements, the plurality of first outlets 12a may be mutualised prior to being introduced into a respective first stage hydrogen collector separator 20 via a single inlet. In some arrangements, the plurality of hydrogen collector separators 20 may be directly connected to the first outlet 12a of the respective sub-set 48 of electrolyser stacks 12. In such an arrangement, the hydrogen-aqueous solution mixture generated at the first outlet 12a of each electrolyser stack 12 may flow directly into the respective first stage hydrogen collector separator 20. In alternative arrangements, other components or units may be provided between the electrolyser stacks 12 and respective first stage hydrogen collector separators 20. It will be appreciated that similar arrangements may be applied to an oxygen side of the facility 10, where present. For example, the first stage oxygen collector separators 22 may each include one or more inlets for coupling to the second outlet 12b of the sub-set 48 of electrolyser stacks 12. The inlets of the oxygen collector separators 22 may be configured similarly to those of the hydrogen collector separators 20.

The arrangement of the first stage hydrogen collector separators 20, and optionally of the first stage oxygen collector separators 22 can improve ease of manufacture, transport and set-up of components of the hydrogen production facility 10. Each collector separator 20, 22 can be smaller than a single, unitary separator that would be coupled to all of the electrolyser stacks 12 in the facility 10. Smaller collector separators 20, 22 are generally easier and more cost-effective to produce, as they can be manufactured using standard equipment and materials, reducing the complexity and lead time of set-up. Transporting smaller units is also more straightforward and less expensive, reducing the need for special handling equipment. During setup, the smaller collector separators 20, 22 can be more easily manoeuvred and installed, providing for greater flexibility in placement and integration into existing systems. Additionally, the modular arrangement of the collector separators 20, 22 and electrolyser stacks 12 enhances the levels of redundancy in the facility 10, since remaining sections of the facility 10 can continue to operate if one collector separator 20, 22 is under maintenance. This redundancy can reduce maintenance-related downtime of the hydrogen production facility 10.

The plurality of first stage hydrogen collector separators 20 are fluidly coupled to a downstream hydrogen buffer vessel 28. The hydrogen buffer vessel 28 is arranged and configured to control a liquid level in the plurality of first stage hydrogen collector separators 20. The hydrogen buffer vessel 28 is common to the plurality of first stage hydrogen collector separators 20 such that the plurality of first stage hydrogen collector separators 20 are in fluid communication with the hydrogen buffer vessel 28. In arrangements in which the facility 10 includes an oxygen separator arrangement 4, the plurality of first stage oxygen collector separators 22 are fluidly coupled to a downstream oxygen buffer vessel 30. The oxygen buffer vessel 30 is arranged and configured to control a liquid level in the plurality of first stage oxygen collector separators 22. The oxygen buffer vessel 30 is common to the plurality of first stage oxygen collector separators 22 such that the plurality of first stage oxygen collector separators 22 are in fluid communication with the oxygen buffer vessel 30. It will be appreciated that the oxygen buffer vessel 30 may be arranged and configured similarly to the hydrogen buffer vessel 28 and so any features of either vessel 28, 30 discussed herein may be applied to the other.

Although the hydrogen production facility 10 is described as having one buffer vessel 28, 30 on each side (i.e. one on the hydrogen side and one on the oxygen side if present), alternative arrangements are envisaged in which a plurality of buffer vessels 28, 30 are provided on each side of the facility 10. In such an arrangement, each hydrogen buffer vessel 28 may be fluidly coupled to a sub-set of hydrogen collector separators 20, and each oxygen buffer vessel 30 may be fluidly coupled to a sub-set of oxygen collector separators 22. Put another way, the hydrogen production facility 10 may include a plurality of hydrogen separator arrangements 2 and a plurality of oxygen separator arrangements 4, which advantageously increases the capacity of the hydrogen production facility 10.

The provision of the hydrogen buffer vessel 28, and the oxygen buffer vessel 30 in optional arrangements, facilitates the reduction in size, for example the diameter, of the plurality of first stage collector separators 20, 22. The buffer vessels 28, 30 provide an additional volume in the facility to absorb liquid level fluctuations in the separators 20, 22. This is particularly important during start-up of the facility 10. In standby mode, liquid (the electrolyte) may be present in the components of the facility, with limited gas presence. As the facility starts up, gas (for example hydrogen or oxygen) will begin to be generated in the electrolyser stacks 12, which will cause liquid level to rise as gas bubbles form in the liquid in the collector separators 20, 22 and in the upstream components back to the electrolyser stacks 12 and outlet lines 12a, 12b connecting them to the first stage collector separators 20, 22. The reduced diameter separators 20, 22 may quickly become overfilled with liquid, which may prevent or hinder efficient separation operations occurring therein. The buffer vessel 28, 30 provides a buffer volume that is better able to absorb changes in volume of the electrolyte the system and thus reduces the risk of the collector separators 20, 22 becoming overfilled with liquid, ensuring efficient operation. By maintaining optimal liquid levels, the buffer vessel 28, 30 helps to stabilise the facility 10, reducing the risk of overflow, providing for smoother startups and facilitates the reduction in size of other components of the facility 10. A gas-liquid interface level may be actively controlled in the buffer vessel 28, 30, removing the need to actively control and monitor a gas-liquid interface level in in first stage collector separators 20, 22, simplifying their manufacture, assembly and installation.

Each of the first stage hydrogen collector separators 20 may include a gas outlet fluidly coupled to the hydrogen buffer vessel 28 via a gas transfer pipe 32 and a liquid outlet fluidly coupled to the hydrogen buffer vessel 28 via a liquid transfer pipe 34. In examples in which the facility 10 includes an oxygen separator arrangement 4, each of the first stage oxygen collector separators 22 may include a gas outlet fluidly coupled to the oxygen buffer vessel 30 via a gas transfer pipe 32 and a liquid outlet fluidly coupled to the oxygen buffer vessel 30 via a liquid transfer pipe 34. The gas outlet may be provided at or near the top or in an upper portion of the respective collector separator 20, 22, for example at or near an upper wall of a vessel that defines the collector separator 20, 22. The liquid outlet may be provided at or near the bottom or in a lower portion of the respective collector separator 20, 22, for example at or near a base of the respective vessel. The hydrogen collector separator 20 may be configured to provide hydrogen at the gas outlet and provide electrolyte at the liquid outlet. The oxygen collector separator 22 may be configured to provide oxygen at the gas outlet and provide electrolyte at the liquid outlet. It will be appreciated that a gas-liquid separation can be imperfect, and so some amount of hydrogen or oxygen may be present in the liquid outlet and liquid transfer pipe 34 and/or some amount of electrolyte may be present in the gas outlet and gas transfer pipe 32.

The hydrogen buffer vessel 28 and the oxygen buffer vessel 30 may each include a plurality of gas inlets and liquid inlets, for example at least one gas inlet and one liquid inlet per collector separator 20, 22 connected to the respective buffer vessel 28, 30. Alternatively, the buffer vessels 28, 30 may have a single gas inlet and a single liquid outlet. For example, the gas transfer pipes 32 of each hydrogen separator 20 and the gas transfer pipes 32 of each oxygen separator may be mutualised or combined upstream of the respective buffer vessel 28, 30. Similarly, the liquid transfer pipes 34 of each hydrogen separator 20 and the liquid transfer pipes 34 of each oxygen separator 22 may be mutualised or combined upstream of the buffer vessel 28. In some arrangements, the gas transfer pipes 32 and the liquid transfer pipes 34 directly connect the respective collector separator 20, 22 with the buffer vessel 28. In alternative arrangements, one or more components may be provided therebetween.

It will be understood that the lower region of each collector separator 20, 22 defines a region in which liquid in the respective separator 20, 22 will gather during operation of the facility 10, for example due to gravitational effects. The "lower" portion may define a region in which gas or gas bubbles (e.g. hydrogen or oxygen bubbles) will be displaced by an accumulation of liquid (e.g. electrolyte) or other denser material during operation of the facility 10. The "upper" portion of a respective collector separator will be understood to be a region in which gas or gas bubbles will accumulate. A gas-liquid interface 20a, 22a may be formed in the respective collector separator 20, 22 between the upper portion and the lower portion. A level of the gas-liquid interface 20a, 22a in the respective separator 20 may be defined by a position of the interface 20a, 22a along a vertical axis. It will be understood that the vertical axis refers to an axis that extends upwardly, for example substantially perpendicularly to a ground or horizontal plane. Reference to vertical position or alignment as used herein should be understood to refer to a position or alignment on the vertical axis. In this way, when two elements are referred to as vertically aligned, this should be understood to mean that the elements have substantially the same position along the vertical axis. In some arrangements, the vertical axis may extend generally perpendicularly relative to the gas-liquid interface in a respective tank.

In some arrangements, the buffer vessel 28, 30 may be configured to further separate gas and liquid (e.g. hydrogen or oxygen and electrolyte) that is separated in the plurality of first stage hydrogen or oxygen collector separators 20, 22. The buffer vessel 28, 30 may be a gas-liquid separation device, for example including or configured as a gravity separator. It will be appreciated that the buffer vessel 28 may configured or operated as any type of separator. For example, the buffer vessel 28, 30 may include a gas-liquid separation tank, a cyclone separator, a membrane separator, a density separator, a stripping column, or the like.

The gas transfer pipes 32 of each collector separator 20, 22 may be in communication with a gas inlet of the respective buffer vessel 28, 30, which may be provided in an upper portion of the vessel 28, 30. The liquid transfer pipes 34 may be in communication with a liquid inlet of the respective buffer vessel 28, 30, which may be provided in a lower region of the vessel 28, 30. Such an arrangement reduces the risk or extent of "re-mixing" between the gas and liquid phases in the buffer vessel 28, 30 that have been separated upstream in the collector separators 20, 22 since the components are introduced into different regions of the buffer vessel 28, 30. A gas-liquid interface 28a may be formed in the hydrogen buffer vessel 28 between the upper portion and the lower portion. A gas-liquid interface 30a may be formed in the oxygen buffer vessel 30 between the upper portion and the lower portion. A level of the gas-liquid interface 28a, 30a in the respective buffer vessel 28, 30 may be defined by a position of the interface 28a, 30a along the vertical axis, e.g. a vertical position relative to the ground.

The hydrogen buffer vessel 28 can be arranged relative to the plurality of first stage hydrogen collector separators 20 such that, during operation of the hydrogen production facility 10, the gas-liquid interface 28a level in the buffer vessel 28 is substantially the same as the gas-liquid interface 20a level in the plurality of first stage hydrogen collector separators 20. The oxygen buffer vessel 30 can be arranged relative to the plurality of first stage oxygen collector separators 22 such that, during operation of the facility 10, the gas-liquid interface 30a level in the oxygen buffer vessel 30 is substantially the same as the gas-liquid interface 22a level in the plurality of first stage oxygen collector separators 22. Such an arrangement assists in maintaining a consistent pressure throughout the entire system of the hydrogen production facility 10. Due to the required fluid flow through the facility 10 from the first stage hydrogen collector separators 20 to the hydrogen buffer vessel 28 and from the first stage oxygen collector separators 22 to the oxygen buffer vessel 30, and the related inevitable pressure differentials, the levels of the gas-liquid interface in each component will not be exactly the same, but will differ as a function of the amount of pressure required to provide the necessary flow. However, taking account of this, it will be possible to regulate the level of the gas-liquid interface 20a in the first stage hydrogen collector separators 20 by regulating the level of the gas-liquid interface 28a in the related buffer vessel 28. Similarly, it will be possible to regulate the level of the gas-liquid interface 22a in the first stage oxygen collector separators 22 by regulating the level of the gas-liquid interface 30a in the oxygen buffer vessel 30.

The gas-liquid interface levels across the facility 10, including in the buffer vessels 28, 30 and in the collector separators 20, 22 can generally be controlled by controlling the gas pressure and/or liquid pressure in the system. To help to provide consistent gas and/or liquid pressure through the components of the system, it is advantageous to have minimal pressure drop in any gas or liquid transfer lines, such as gas transfer pipe 32 and/or liquid transfer pipe 34. Therefore, these pipes can be sized and dimensioned to reduce and/or minimise pressure drop due to flow resistance of the fluid passing through them. Reducing the pressure drop in the gas transfer pipe 32 assists in maintaining the gas phase in the buffer vessel 28, 30 at the same or similar pressure as the gas phase in the respective collector separators 20, 22. In this way, the configuration of the gas transfer pipe 32 can assist in controlling the level of the gas-liquid interface 28a, 30a in the buffer vessel 28, 30 and in the collector separators 20, 22. The configuration of the gas transfer pipe 32 assists in maintaining an effective gas-liquid separation in the buffer vessel 28, 30 and respective collector separators 20, 22 thereby improving the separation of the respective components and providing a clear gas-liquid interface in the buffer vessels 28, 30 and collector separators 20, 22. In some arrangements, the gas transfer pipe 32 may be sized and dimensioned such that the pressure drop in the gas phase between the collector separators 20, 22 and the respective buffer vessel 28, 30 is less than 100 mbar, optionally less than 50 mbar, optionally 10 mbar, optionally 5 mbar, 2 mbar or 1 mbar.

Any pressure imbalance can disrupt the operation of the electrolyser stacks 12 and can lead to inefficiencies throughout the facility 10. For example, pressure variations between both sides of the membranes of the electrolyser stacks 12 can be harmful to the membrane inside the electrolyser stacks 12, for example by endangering their integrity. Avoiding a slug flow regime is therefore important in order to reduce pressure variations as slugs propagate through the system. A first stage separation step effected in the first stage hydrogen collector separators 20 and the first stage oxygen collector separators 22 if present, closer to the electrolyser stacks 12 than the buffer vessel 28, 30, can reduce the length of lines over which electrolyte containing the highest levels of gas bubbles travels, which reduces the risk of a slug flow-regime developing. This in turn helps to reduce the risk and magnitude of pressure variations through the system.

The gas-liquid interface levels 20a, 22a, 28a, 30a in the buffer vessel 28, 30 or respective first stage collector separator 20, 22 refers to a boundary between the gas phase and liquid phase within the respective vessel. The gas-liquid interface level refers to a vertical height of the gas-liquid interface 20a, 22a, 28a, 30a or boundary relative to the ground. Put another way, the gas-liquid interface level refers to a distance along the vertical axis between the gas-liquid interface 20a, 22a, 28a, 30a or boundary in a vessel and the ground. The boundaries between the gas and liquid phases in each of the separators 20, 22 and in the respective buffer vessel 28, 30 may be substantially aligned in a vertical direction, or may be at substantially equal heights. It will be understood that the gas-liquid interface 28a, 30a in the buffer vessel 28, 30 may not be perfectly aligned with the gas-liquid interface 20a, 22a of the separators 20, 22 in practice. For example, the gas-liquid interface 20a, 22a of the separators 20, 22 may be slightly higher than that of the buffer vessel 28, 30 to accommodate a minor pressure drop in the piping. In some arrangements, the gas-liquid interfaces 20a, 22a of the collector separators 20, 22 may be offset from the gas-liquid interface 28a, 30a of the respective buffer vessel 28, 30 by less than about 1 m, optionally by less than 0.5 m, optionally by less than 0.3 m, optionally be less than 0.1 m.

Various properties and arrangements can contribute to enabling the gas-liquid interface level in the first stage collector separators 20, 22 to be controlled with the gas-liquid interface level in the buffer vessels 28, 30. The hydrogen buffer vessel 28 may be arranged and/or positioned to maintain a gas-liquid interface level within a vertical height of the plurality of first stage hydrogen collector separators 20. If present, the oxygen buffer vessel 30 may be arranged and/or positioned to maintain a gas-liquid interface level within a vertical height of the plurality of first stage oxygen collector separators 22. At least a portion of the respective buffer vessel 28, 30 may be located vertically within a height of the respective plurality of the first stage collector separators 20, 22. The buffer vessels 28, 30 may be arranged such that the vertical height of the buffer vessels 28, 30 overlaps the vertical height of at least one of the respective first stage collector separators 20, 22. The overlap may be by at least 20% or two tenths, optionally by at least one third, optionally by at least 40% or four tenths, optionally by at least 50% or a half, optionally by at least 60% or 6 tenths, optionally by at least 80% or 8 tenths of the vertical height of the buffer vessel 28, 30. The overlap may be by at least 50% or one half, optionally by at least two thirds, optionally by at least 70% or seven tenths, optionally by at least 80% or eight tenths, optionally by at least 90% or 9 tenths, optionally by at least 95% or 95 hundredths, optionally by 100% or one times the vertical height of the first stage collector separators 20, 22.

The respective buffer vessel 28, 30 may have a volume greater than a volume of at least one of the respective plurality of the first stage collector separators 20, 22. The buffer vessels 28, 30 may have a horizontal cross-sectional area that is greater than a horizontal cross-sectional area of at least one of the respective plurality of the first stage collector separators 20, 22. The hydrogen buffer vessel 28, and optionally the oxygen buffer vessel 30, may have a volume and/or a horizontal cross-sectional area that is greater than that of at least one of, or a proportion of, or all of, the respective plurality of the first stage collector separators 20, 22 to which it is fluidly connected. The proportion may be one tenth, one eighth, one fifth, one quarter, one third, one half, three fifths, two thirds, three quarters, four fifths or nine tenths or any integer percentage value between 1% and 99%. The buffer vessel 28, 30 being greater than a suitable proportion of the respective first stage hydrogen or oxygen collector separators 20, 22 to which it is fluidly connected can facilitate the management of volume increases in the electrolyser stack 12 in the system upstream of the buffer vessel 28, 30. This may in particular be the case on start-up, when gas is generated, but may not yet have propagated through the system far enough to be efficiently separated out of the electrolyte.

In some arrangements, the hydrogen buffer vessel 28 has an internal volume that is between 10% and 100% of, or one tenth and one times, a total internal volume of the plurality of first stage hydrogen collector separators 20. It will be understood that the total internal volume of the plurality of hydrogen collector separators 20 is defined as the sum of the internal volume of each hydrogen collector separator 20. In some arrangements, the internal volume of the hydrogen buffer vessel 28 may be between one tenth or 10% and 8 tenths or 80%, optionally between one tenth or 10% and six tenths or 60%, optionally between one tenth or 10% and a half or 50%, optionally between one tenth or 10% and three tenths or 30%, optionally between two tenths or 20% and three tenths or 30%, of the total internal volume of the plurality of hydrogen collector separators 20. Any of the expressed values may be an upper or lower bound on the expressed range. If present, the oxygen buffer vessel 30 may be configured with the same ratios with respect to the plurality of first stage oxygen collector separators 22. In some arrangements, the buffer vessels 28, 30 may have an internal volume that is larger than at least one of the plurality of first stage collector separators 20, 22. The buffer vessels 28, 30 may be sized so as to absorb the increase in liquid level during start-up of the hydrogen production facility 10.

The respective buffer vessels 28, 30 may be arranged such that a region of the vessels 28, 30 in which the gas-liquid interface 28a, 30a is located or intended to locate is vertically aligned with a region of the respective collector separators 20, 22 in which the gas-liquid interface 20a, 22a is located or intended to locate. Put another way, the buffer vessels 28, 30 may be arranged such that a normal liquid level in the buffer vessels 28, 30 is vertically aligned with a normal liquid level in each of the collector separators 20, 22. The term "normal liquid level" will be understood to refer to the expected level of the gas-liquid interface in a respective vessel or collector separator during normal operation of the hydrogen production facility 10. The normal liquid level may be determined prior to operation of the facility 10, for example via calculations that may take numerous factors into account. The relative arrangement of the buffer vessels 28, 30 and collector separators 20, 22 can then be determined based on the calculated normal liquid level such that the normal liquid levels on the hydrogen side are aligned and the normal liquid levels on the oxygen side are aligned. The buffer vessels 28, 30 may have a greater vertical height than that of each of the respective collector separators 20, 22. This may advantageously provide room for control instruments connected to the buffer vessels 28, 30.

In some arrangements, the hydrogen buffer vessel 28 is arranged such that a base of the vessel 28 is vertically aligned with a base of each of the plurality of first stage hydrogen collector separators 20. The oxygen buffer vessel 30 if present can be arranged such that a base of the vessel 30 is vertically aligned with a base of each of the plurality of first stage oxygen collector separators 22. In some arrangements, the buffer vessels 28, 30 may be arranged such that a vertical mid-point of each of the buffer vessels 28, 30 is substantially aligned with a vertical mid-point of the respective collector separators 20, 22.

The downstream hydrogen buffer vessel 28 may be configured so as to be able to control and/or maintain a gas-liquid interface 20a level in the plurality of first stage hydrogen collector separators 20. The gas-liquid interface 20a level in the plurality of first stage hydrogen collector separators 20 may be controlled as a function of the gas-liquid interface 28a level in the downstream hydrogen buffer vessel 28. If present, the downstream oxygen buffer vessel 30 may be similarly configured such that the gas-liquid interface 22a level in the plurality of first stage oxygen collector separators 22 may be controlled as a function of the gas-liquid interface 30a level in the downstream buffer vessel 30.

The facility 10 may include a sensor arrangement 42 coupled to the hydrogen buffer vessel 28 to monitor the gas-liquid interface 28a level in the vessel 28. The gas-liquid interface 30a level in the oxygen buffer vessel 30 may also be monitored by a sensor arrangement 42 coupled thereto. The sensor arrangement 42 may include a level sensor coupled to the respective buffer vessel 28, 30. The sensor arrangement 42 may generate a signal relating to the gas-liquid interface 28a, 30a level in the respective buffer vessel 28, 30. The signal may indicate the level to an operator who can take appropriate action, for example by controlling one or more valves in the facility 10 to alter the gas-liquid interface level if necessary. The facility 10 may include a control system 44 which may be coupled to the sensor arrangement 42 such that the signal generated by the sensor arrangement 42 is received by the control system 44. The control system 44 may control one or more valves in the facility 10 to adjust the gas-liquid interface level if necessary. In some arrangements, a valve 46 may be provided downstream of the buffer vessel 28, 30, such as in a gas outlet line of the buffer vessel 28, 30. The valve 46 may be controlled by the control system 44 in response to a signal from the sensor arrangement 42. For example, if it is determined that the level should increase in response to the signal from the sensor arrangement 42, the control system 44 may instruct the valve 46 to remove or release more gas or gas flow from the buffer vessel 28, 30 so as to increase the liquid level therein. The opposite may occur if it is determined that the gas-liquid interface 28a, 30a level should decrease in the buffer vessel 28, 30. The active control and monitoring of the buffer vessel 28, 30 facilitates the control of the upstream collector separators 20, 22 without needing to actively control and/or monitor the collector separators 20, 22. In this way, the control system 44 can be simpler and involve less equipment. Further the first stage collector separators 20, 22 may be simplified and may not require complex control sensors of valves.

The plurality of first stage hydrogen collector separators 20 and the optional first stage oxygen collector separators 22 may each include or be provided in the form of a collector line 36 coupled with an outlet 12a, 12b of each of the respective sub-set 48 of the plurality of electrolyser stacks 12. A collector line 36 can be seen as a structure that combines a plurality of inputs. In the present example, the collector line 36 of a hydrogen collector separator 20 may combine the hydrogen-aqueous solution mixture that exits each electrolyser stack 12 of the sub-set 48 of electrolyser stacks 12 via the first outlet 12a. The collector line 36 of an oxygen collector separator 22 may combine the oxygen-aqueous solution mixture that exits each electrolyser stack 12 of the sub-set 48 of electrolyser stacks 12 via the second outlet 12b. In some arrangements, the first stage hydrogen collector separators 20 are each provided as a collector line 36, for example as shown in Figure 1 and Figure 2. The collector line 36 may be referred to as a horizontal column in some arrangements.

The plurality of first stage hydrogen collector separators 20 may be or include a gas-liquid separation device. In some arrangements, the plurality of first stage oxygen collector separators 22 may be or include a gas-liquid separation device. The gas-liquid separation device can remove at least a proportion of gas and bubbles from the electrolyte, e.g. in the hydrogen-aqueous solution mixture or the oxygen-aqueous solution mixture. The gas-liquid separation device can be a dedicated vessel or a collector/decanter. The gas-liquid separation device may be any suitable unit to separate gas from the electrolyte, for example the gas-liquid separation device may be or include a gas-liquid separation tank, a cyclone separator, a membrane separator, a density separator, a stripping column, or the like. In some arrangements, the gas-liquid separation device may include a coalescer device, for example an ultrasonic coalescer which may be intrusive (e.g. in direct contact with fluid in the device) or non-intrusive (e.g. not in direct contact with fluid in the device). The gas-liquid separation device may be or include a gravity separator. In some arrangements, the plurality of first stage collector separators 20, 22 may be a gas-liquid separation device and may include a collector line 36. The gas-liquid separation device may include or be in the form of a horizontal vessel, such as a vessel which extends to a greater degree in a horizontal direction than a vertical direction.

The hydrogen separator arrangement 2 may include one or more hydrogen coalescing devices 16. If present, the oxygen separator arrangement 4 may include one or more oxygen coalescing devices 18. The coalescing device 16, 18 may be referred to as an aqueous-solution recovering device. The coalescing device 16 may include one or more coalescers. The coalescing devices 16 are configured to recover at least part of the electrolyte. The coalescing devices 16 are configured to recover at least part of the electrolyte from the respective hydrogen-aqueous solution mixture. The coalescing device 16 can be or include any type of coalescer. An example is a membrane-type coalescer, but an ultrasonic coalescer and a centrifugal coalescer, among others, are also possible.

In Figure 1, certain positions of optional coalescing devices 16, 18 are shown in dashed lines. As shown, one or more coalescing devices 16, 18 may be positioned upstream of the first stage collector separators 20, 22 between the plurality of electrolyser stacks 12 and the plurality of first stage collector separators 20, 22. In alternative or additional arrangements, one or more coalescing devices 16, 18 may instead be positioned downstream of the first stage hydrogen collector separators 20, between the plurality of first stage collector separators 20, 22 and the respective buffer vessel 28, 30. In some arrangements, one or more coalescing devices 16, 18 may be provided downstream of the buffer vessel 28, 30, for example in a liquid outlet of the buffer vessel 28, 30. In some arrangements, one or more of the coalescing devices 16, 18 may be integrated with (for example, directly within) the plurality of first stage collector separators 20, 22 and/or with the buffer vessel 28, 30 and/or within one or more pipelines in the facility 10.

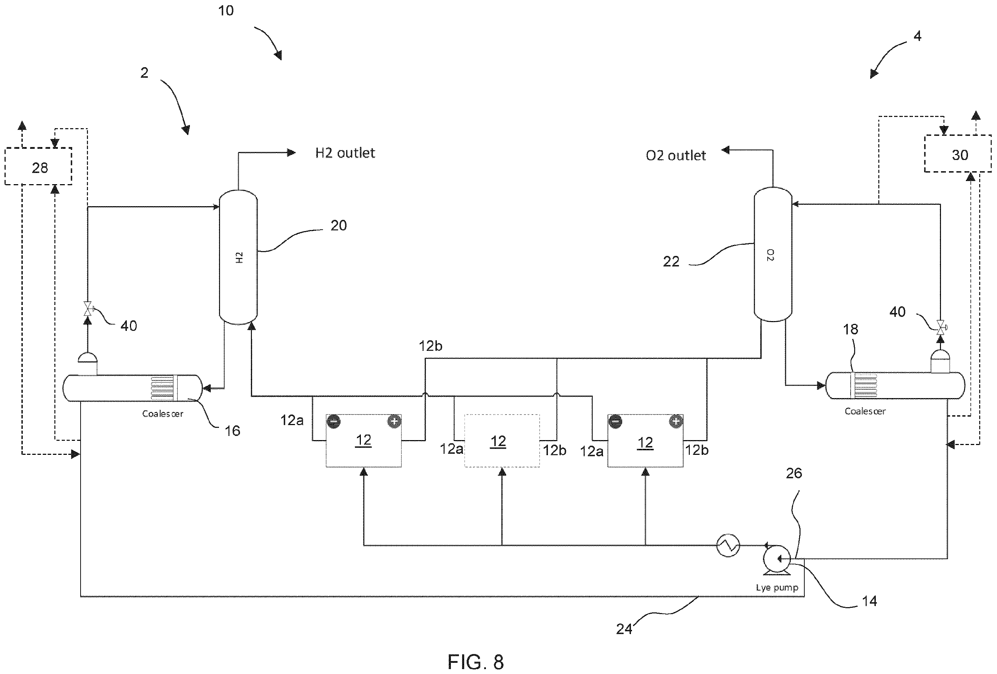

The coalescing devices 16, 18 can be implemented in an intrusive way, e.g. directly in contact with the fluid or interior of the equipment, or in a non-intrusive way, e.g. not in direct contact with the fluid or interior of equipment, for example in contact with an exterior of equipment. An example non-intrusive configuration of the coalescing devices 16, 18 may include an ultrasonic generator positioned in contact with the outside of the equipment (e.g. a vessel or piping) to generate ultrasonic waves through the equipment material. The coalescing devices 16, 18 may include a plurality of coalescers. The plurality of coalescers may be of the same type, or may include different types of coalescers. A pressure control valve 40 (see Figure 8) may be provided downstream of one or more or each of the coalescing devices 16 to provide control of a level of a gas-liquid interface therein, for example in arrangements in which the coalescing devices 16, 18 include a vessel with a coalescing device (of any type) integrated therewith.

In some arrangements, the hydrogen separator arrangement 2 and the oxygen separator arrangement 4 can be connected to each other through a line which may be termed a pressure balancing line 24. The pressure balancing line 24 extends between an outlet of the hydrogen separator arrangement 2 and an outlet of the oxygen separator arrangement 4. In this way, an outlet of the hydrogen separator arrangement 2 is fluidly coupled to an outlet of the oxygen separator arrangement 4 via the pressure balancing line 24. The provision of the pressure balancing line 24 balances pressure between the hydrogen separator arrangement 2 and the oxygen separator arrangement 4 and prevents or reduces a pressure differential across the plurality of membranes in the electrolyser stacks 12.

The pressure balancing line 24 may extend between the hydrogen buffer vessel 28 of the hydrogen separator arrangement 2 and the oxygen buffer vessel 30 of the oxygen separator arrangement 4. The pressure balancing line 24 may extend between a lower portion of the hydrogen buffer vessel 28 and a lower portion of the oxygen buffer vessel 30. The "lower" portion of each vessel defines a region in which liquid in the respective vessel will gather during operation of the facility 10 due to gravitational effects. The "lower" region may be proximal a base of the respective vessel. Configuring the pressure balancing line 24 to couple the lower portion of each of the buffer vessels 28, 30 provides fluid communication between regions of the vessels 28, 30 in which liquid accumulates (due to gravity). This prevents significant gas bubbles from the vessels 28, 30 being present in the pressure balancing line 24. It will be appreciated that the pressure balancing line 24 may extend between any components of the oxygen separator arrangement 4 and the hydrogen separator arrangement 2.

The hydrogen production facility 10 may include a recycle or mutualization line 26. The recycle line 26 is configured to recycle electrolyte from the hydrogen separator arrangement 2 and/or the oxygen separator arrangement 4 to the plurality of electrolyser stacks 12. Although not shown, it will be appreciated that the recycle line 26 may be mixed with water upstream of the electrolyser stacks 12 or within the electrolyser stacks 12 so as to facilitate electrolysis of water in the electrolyser stacks 12. A pump 14 (such as seen in Figure 2) may be provided to transport electrolyte in the recycle lines 26 to the electrolyser stacks 12. The recycle line 26 may include one or more heat exchangers (such as seen in Figure 2) to alter the temperature of electrolyte in the recycle line (e.g. to reach a target electrolysis temperature prior to introduction into the one or more electrolyser stacks 12). Electrolyte pumping downstream of the separation can be mutualized and split before entering the cell. The recycle line 26 can be split into multiple streams (e.g. one stream per electrolyser stack 12) prior to introduction into the electrolyser stack 12. In some arrangements, the recycle line 26 may be a fluid conduit extending from the balancing line 24 to the plurality of electrolyser stacks 12. In some examples, the recycle line 26 may be the same as the pressure balancing line 24.

In Figure 1, each buffer vessel 28, 30 includes two liquid outlets provided at a lower region thereof. One of the liquid outlets is connected to the pressure balancing line 24, with the other being connected to the recycle line 26. In arrangements in which a coalescing device 16, 18 is provided downstream of the buffer vessel 28, 30 in the liquid outline line, the pressure balancing line 24 may extend between the hydrogen coalescing device 16 and the oxygen coalescing device 18. The buffer vessels 28, 30 may include a gas outlet provided at an upper region thereof. The gas outlet line may be connected to one or more coalescing devices 16, 18, or may be further processed to increase the gas purity. For example, in Figure 1 the gas outlet line of the buffer vessels 28, 30 is connected to a gas treatment unit 50. The gas treatment unit 50 may be any unit configured to increase the purity of hydrogen or oxygen (dependent on the side of the facility 10) in the outlet of the respective buffer vessel 28, 30. For example, the gas treatment unit 50 may be or include distillation, membrane separation, gas scrubbers, adsorption units or the like.

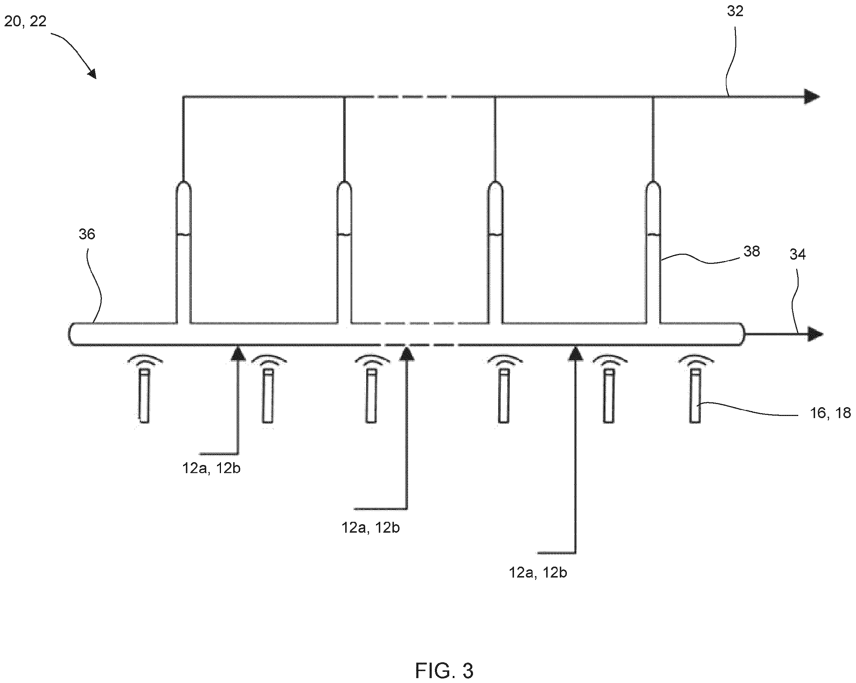

Figures 3 to 7 illustrate example arrangements, elements of which can be incorporated into the hydrogen and/or oxygen separator arrangements 2, 4 of the hydrogen production facility 10 of Figure 1 or Figure 2. The collector separator 20, 22 of Figures 3 to 7 may include a plurality of inlets that are fluidly coupled to the hydrogen or oxygen side outlet, e.g. the first or second outlets 12a, 12b of a plurality of electrolyser stacks 12. The inlets may be directly coupled to one or more electrolyser stacks 12 in some arrangements, e.g. such that the inlets are mutualised with the first outlet 12a or the second outlet 12b. In some arrangements, the inlets to the separators of Figures 3 to 7 may be connected to or mutualised with an outlet of a pre-separator (not shown) that may be configured to remove a portion of the electrolyte from the hydrogen-aqueous solution mixture or the oxygen-aqueous solution mixture obtained from the electrolyser stacks 12, or to an upstream coalescing device. In this way, the inlet of the separators 20, 22 may include a gas-rich mixture.

The collector separators 20, 22 may include a gas outlet coupled to a buffer vessel 28, 30 (not shown) via the gas transfer pipe 32, and an electrolyte or liquid outlet coupled to a buffer vessel 28, 30 via the liquid transfer pipe 34. The collector separator 20, 22 of Figure 3 includes a collector line 36 connected to or mutualised with a series of gas-liquid separation devices. The collector line 36 is coupled to the outlet 12a, 12b of a plurality of electrolyser stacks 12. In the illustrated arrangement, the gas-liquid separation devices are vertical columns 38 that are provided as gravity separators. The vertical columns 38 extend in a generally vertical direction from the collector line 36 to the gas transfer pipe 32, such that gas travels upwards. Liquid is accumulated in the collector line 36 and transferred to the buffer vessel 28, 30 via the liquid transfer pipe 34. In alternative arrangements, the collector line 36 may act as a horizontal gas-liquid separation device, removing the need for vertical columns 38 that occupy additional vertical space.

As shown in the illustrated arrangement, one or more coalescing devices 16, 18 can be integrated with the collector separator 20, 22. The coalescing device 16, 18 can be provided in the form of one or more coalescers provided along the collector line 36. The coalescers may be non-intrusive, such that the coalescers are provided external to the collector line 36 and do not contact fluid therein. For example, one or more ultrasonic probes can be provided adjacent an external wall of the collector line 36. A plurality of ultrasonic probes may be provided at different locations and with different orientations (preferably oriented in an upward direction as shown in the FIG.3) along the collector line 36. The ultrasonic probe or probes may be provided external to the collector line 36, for example proximal an external wall of the collector line 36. Different types of coalescers may be implemented in alternative arrangements. For example, one or more coalescing devices 16, 18 may be provided inside the collector separator 20, 22 for direct contact with fluid therein. While the collector line 36 is substantially horizontal in FIG. 3, in some arrangements, the coalescers may be provided along a substantially vertical line or differently angled line. The arrangement of coalescers of Figure 3 may be implemented in other areas of the facility 10 in some arrangements (e.g. along other lines or the electrolyser stacks 12).

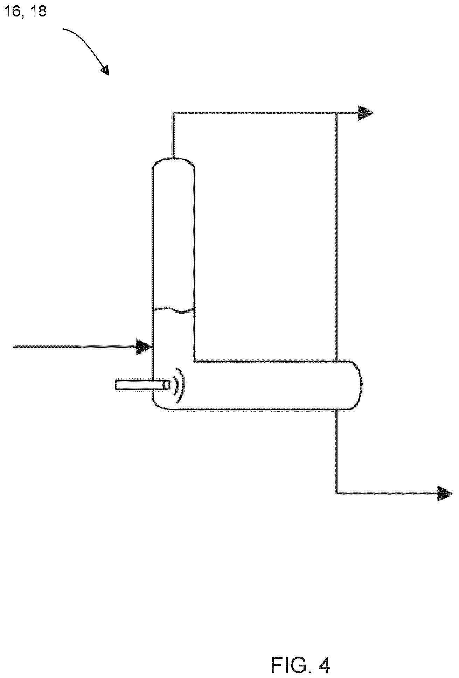

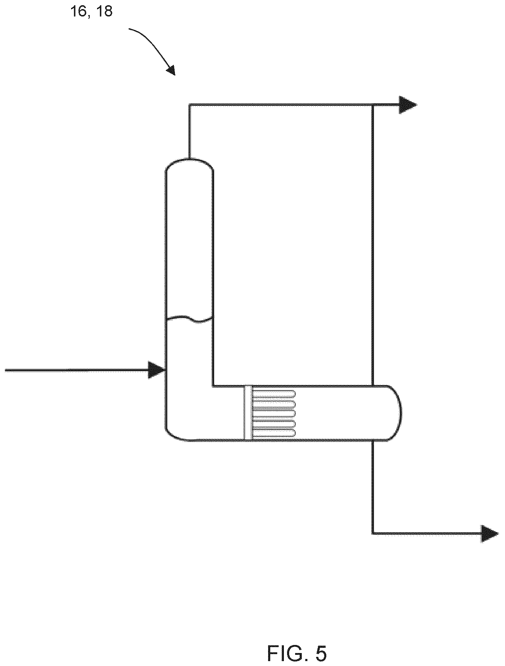

Figures 4 and 5 indicate an example of a coalescing device 16, 18 that may be provided upstream and/or downstream of the collector separators 20, 22 and/or the buffer vessel 28, 30. The coalescing device 16, 18 may be provided as a separate vessel with a coalescing functionality integrated therein. The vessel may be configured to receive a feed from the electrolyser stacks 12, from the collector separators 20, 22, or from the buffer vessel 28, 30. In arrangements in which the coalescing device 16, 18 is provided downstream of the collector separators 20, 22 or buffer vessel 28, 30, the inlet to the coalescing device 16, 18 may be a gas-rich feed. In Figure 4, the coalescing device 16, 18 includes an ultrasonic coalescer inside the vessel of the coalescing device. In Figure 5, the coalescing device 16, 18 includes a membrane coalescer inside the vessel of the coalescing device. The coalescer of the coalescing device 16, 18 of Figures 4 and 5 is intrusive. In such an arrangement, the coalescer is located within an internal volume defined by a vessel of the coalescing device 16, 18. In such an arrangement, the coalescer may directly contact fluid in the vessel. In alternative arrangements, the coalescer may be non-intrusive. In such an arrangement, the coalescer may be provided external to the internal volume define by the vessel of the coalescing device, or the vessel may be omitted and coalescers may be provided along one or more pipelines.

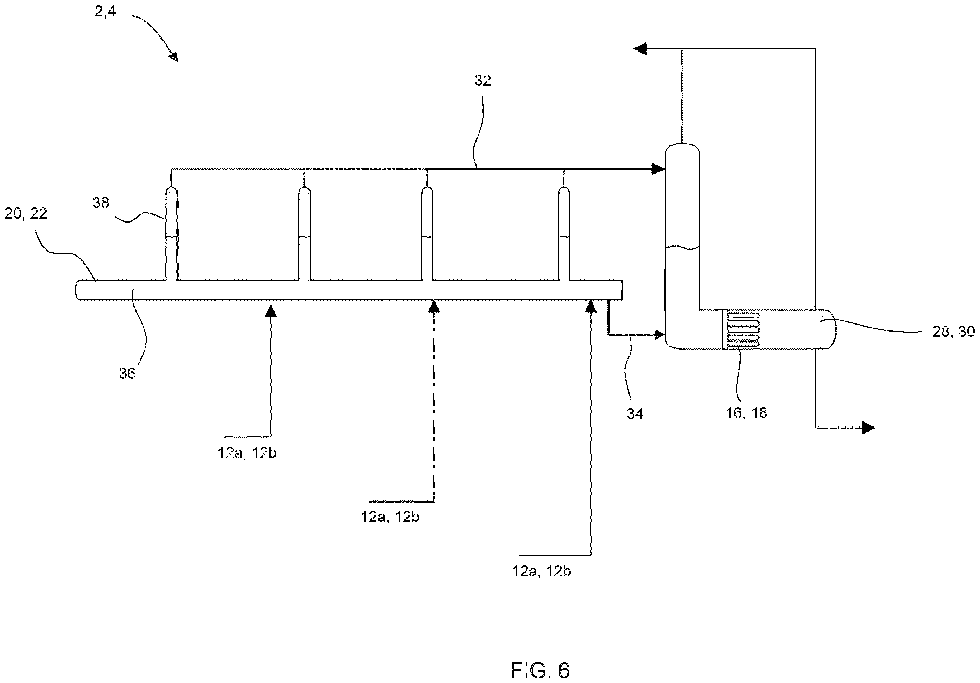

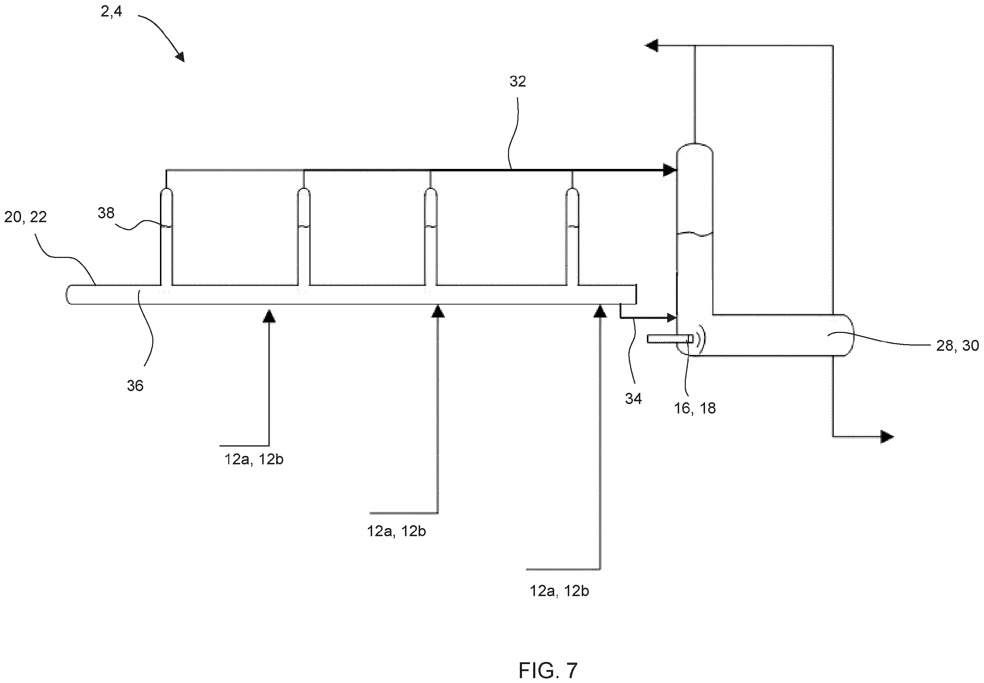

Referring to Figures 6 and 7, the separator arrangement 2, 4 can include a coalescing device 16, 18 downstream of the respective collector separator 20, 22. The coalescing device 16, 18 may be connected to or mutualised with the buffer vessel 28, 30. In Figure 6, the coalescing device 16, 18 includes a membrane coalescer. The coalescing device 16, 18 can be provided in a lower region of a buffer vessel 28, 30, e.g. at or toward a base of the vessel. As previously discussed, the lower region of the buffer vessel 28, 30 may refer to a region in which liquid (e.g. electrolyte or the aqueous mixture) has accumulated during operation of the facility 10 due to gravitational effects. In Figures 6 and 7, the buffer vessel 28, 30 includes a substantially vertical portion connected to a substantially horizontal portion, so as to define a generally L-shaped vessel. However, the buffer vessel may take any vessel form as required by a particular implementation, such as according to space constraints. One or more coalescing devices 16, 18 may be provided in the buffer vessel 28, 30, such as in the horizontal portion and/or the vertical portion. In Figure 6, a membrane coalescer is provided at a substantially horizontal portion of the vessel of the buffer vessel 28, 30. In Figure 7, the coalescing device 16, 18 may include an ultrasonic coalescer, e.g. an ultrasonic probe provided in communication with a region, e.g. a lower region at or toward a base of a vessel. In this figure, the ultrasonic coalescer is located proximal the interface between the substantially vertical and the substantially horizontal portion of the vessel. Alternatively or in combination, a coalescing device can be installed in the upper region of a buffer vessel 28, 30. This coalescing device could be for example a membrane or a mesh or any other coalescing device. It will be appreciated that the buffer vessel 28, 30 may be configured in any suitable form.

It will be appreciated that any elements or combination thereof of the separating arrangements 2, 4 indicated in Figures 3 to 7 may be implemented in the arrangements of Figures 1 and 2. An advantageous modification that can be made to the arrangements shown in Figures 3, 6 and 7, is a reduction in the vertical heights of the first stage collector separators 20, 22, which can facilitate easier manufacture, transport, assembly and modularisation of a facility.

Figure 8 indicates a schematic block diagram of a hydrogen production facility 10 according to an example arrangement. The arrangement is similar to that of Figure 1, but only one hydrogen first stage collector separator 20 and one oxygen first stage collector separator 22 are shown. In some examples and as mentioned previously, the electrolyser stack 12 pressure differential can be disconnected from the gas phase pressure differential of both separation vessels of the electrolysis system. The various elements of the system can be connected by lines to transfer or communicate the various fluids and various pressures between them. These may be standard pressure lines or conduits as used in industrial electrolysis systems. The lines may be provided as a pipeline. The pressure drops in the lines can be controlled upstream of the separation, which may mean upstream of the collector, which can be done by using a suitably configured separation device or by properly sizing the pipeline network. In the illustrated arrangement, the pressure balancing line 24 extends between an outlet of the hydrogen separator arrangement 2 and an outlet of the oxygen separator arrangement 4. In this way, the outlet of the hydrogen separator arrangement 2 is fluidly coupled to the outlet of the oxygen separator arrangement 4 via the pressure balancing line 24.

The pressure balancing line 24 is positionable to couple at a lower portion of each of the oxygen separator arrangement 4 and the hydrogen separator arrangement 2. The pressure balancing line 24 may be positionable and/or arranged to provide fluid communication between a first region of a vessel of the hydrogen separator arrangement 2 and a second region within a vessel of the oxygen separator arrangement 4. It will be understood that the vessel of the hydrogen separator arrangement 2 and oxygen separator arrangement 4 connected by the pressure balancing line 24 may be a vessel of the respective gas-liquid separation device 20, 22, a vessel of a coalescing device 16, 18 or a buffer vessel 28, 30. The first region may be at or proximal to a base of the vessel of the hydrogen separator arrangement 2. The second region may be at or proximal to a base of the vessel of the oxygen separator arrangement 4. The pressure balancing line 24 may extend directly between the first region and the second region. The pressure balancing line 24 may include a fluid conduit having a first end extending into the first region, and a second end extending into the second region. For example, the pressure balancing line 24 can enter at or toward the lowermost point of the separator arrangement 2, 4 to allow the liquid to flow both ways from a side to another and to prevent or at least reduce the risk of any direct displacement of the gaseous phase from one vessel to the other. The pressure at the inlet of the separator arrangements can be coupled to the liquid level in the separator vessel. The separator inlet can be at the bottom or near the bottom of the separator (e.g. at or near a base of the respective vessel). If a distributor is considered, there can be a hole at its base.

As can be seen in the figures, the pressure balancing line 24 directly connects the hydrogen separator arrangement 2 and the oxygen separator arrangement 4. It will be understood that the term "directly connects" refers to a direct fluid connection between the hydrogen separator arrangement 2 and the oxygen separator arrangement 4, e.g. the pressure balancing line 24 extends between the separator arrangements 2, 4 without passing through any other units or elements of the system external to the respective separators 2, 4. The pressure balancing line 24 may include a fluid conduit extending directly between the oxygen separator arrangement 4 and the hydrogen separator arrangements 2. In arrangements in which the pressure balancing line 24 extends between the buffer vessels 28, 30, the facility 10 may include a single pressure balancing line 24. In alternative arrangements, a plurality of pressure balancing lines may be provided, for example where the pressure balancing line 24 extends between a hydrogen coalescing device 16 and an oxygen coalescing device 18 or between each hydrogen collector separator 20 and each oxygen collector separator 22.

In Figure 8, the pressure balancing line 24 is provided upstream of the respective buffer vessels 28, 30. In such an arrangement, the pressure balancing line 24 may be provided downstream of the one or more coalescing devices 16, 18. Put another way, the pressure balancing line 24 may couple the hydrogen separator arrangement 2 and the oxygen separator arrangement 4 at a point downstream of the hydrogen coalescing device 16 and the oxygen coalescing device 18. Such an arrangement reduces the risk of gas carry-over in the pressure balancing line 24 since more gas has been removed at this stage. In arrangements in which a plurality of coalescing devices 16, 18 are provided in the respective separator 2, 4, the pressure balancing line 24 may be extend from a location downstream of at least one coalescing device such that the presence of gas in the line has been at least partially reduced. It will be appreciated that the pressure balancing line 24 may extend between any component of the hydrogen separator arrangement 2 and the oxygen separator arrangement 4.

The arrangement of Figure 8 includes the recycle line 26. The pump 14 is provided to transport electrolyte in the recycle line 26 to the electrolyser stacks 12. The pump 14 is provided in the recycle line 26 in the illustrated arrangement, for example the recycle line 26 is in the form of a fluid conduit and a pump is provided along the conduit. In the figures, the pump 14 is labelled "lye pump", however, it will be appreciated that the fluid in the recycle line 26 may include any substances (e.g. the electrolyte may be sodium hydroxide in some arrangements, but it will be appreciated that any suitable electrolyte may be utilized). The balancing line 24 and the recycle line 26 upstream of the pump 14 can be the same. In Figure 1, the recycle line 26 is connected to or mutualized with the pressure balancing line 24 such that the electrolyte in the balancing line 24 is recyclable to the plurality of electrolyser stacks 12 via the recycle line 26. The recycle line 26 may be a fluid conduit extending from the balance line 24 to the plurality of electrolyser stacks 12. The pump 14 is provided along the fluid conduit of the recycle line 26.

The electrolyte can be mixed from both sides, e.g. from the hydrogen separator arrangement 2 and the oxygen separator arrangement 4. The electrolyte can be gas-free to minimize hydrogen transferring to oxygen and oxygen transferring to hydrogen, for safety reasons. For example, potassium hydroxide in solution can stabilize the gas microbubbles, which can prevent them from fusing and forming larger bubble that can rise quickly to the surface. Targeted purity may otherwise involve irrational residence time and separator dimensions to allow for sufficient separation in a gravity separator device. In some arrangements, however, the separation can be split into two multiple different equipment units, for example, via gas-liquid separation devices (e.g. the first stage collector separators 20, 22) and a separate coalescing devices (e.g. the hydrogen coalescing device 16 and the oxygen coalescing device) to avoid such an issue.

In Figure 8, the coalescing devices 16, 18 each include a gas outlet which is recirculated to the first stage collector separator 20, 22 (e.g. downstream of the pressure relief valve 40) to improve purity of the gas outlet from the production facility 10. In the context of the facility 10 of Figure 1, the arrangement of Figure 8 may include the buffer vessels 28, 30 downstream of the coalescing devices 16, 18 which is indicated in dashed lines. The coalescing devices 16, 18 may be any of the coalescing devices discussed in relation to Figures 1 to 7, for example they may be coalescing devices provided upstream of the buffer vessel 28, 30 and downstream of the respective collector separator 20, 22. In this way, the liquid and gas outlet of the coalescing device 16, 18 may be introduced into the buffer vessel 28, 30. The buffer vessel 28, 30 may generate a gas outlet and a liquid outlet. The liquid outlet may be recirculated to the electrolyser stacks 12 via the recycle line 26 and/or pressure balancing line 24.

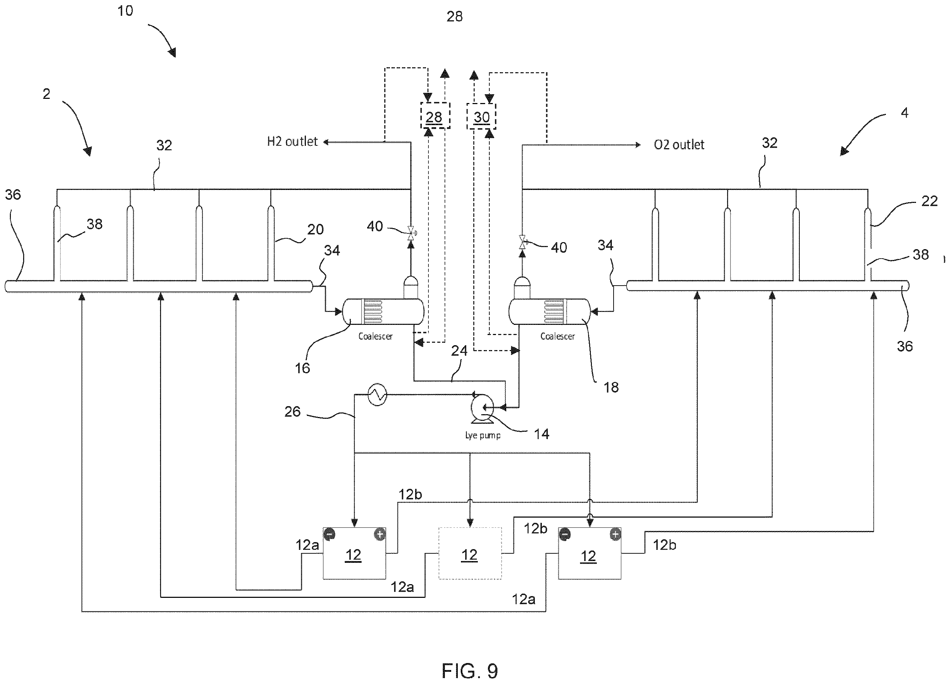

Figure 9 is a block diagram of a hydrogen production facility 10 according to another example. The arrangement of Figure 9 is substantially the same as that in previous figures and so only the differences will be discussed in detail. Only one hydrogen first stage collector separator 20 and one oxygen first stage collector separator 22 are shown. In Figure 9, the respective first stage collector separator 20, 22 includes a collector line 36 and a gas-liquid separation device. A complementary coalescing device 16, 18 is provided downstream to of the first stage collector separator 20, 22.

In Figure 9, each separator arrangement 2, 4 can include two stream-conveying lines: an upper conveying line and a lower conveying line, disposed one on top of the other. The upper conveying line is similar to the gas transfer pipe 32 discussed previously. The upper conveying line is fluidly coupled to respective the collector separator 20, 22. The upper conveying line can be connected to the respective hydrogen or oxygen outlet of the collector separator 20, 22. The lower conveying line can be fluidly coupled to the respective coalescing device 16, 18. The lower conveying line may include the collector line 36. The lower conveying line may be connected to or mutualised with the liquid transfer pipe 34. In some arrangements, the upper conveying line may be fluidly coupled to one or more coalescing devices 16, 18. One or both conveying lines can be supplied with the hydrogen or oxygen-aqueous solution mixture from the electrolyser stacks 12. The conveying lines can be fluidically coupled to each other by one or more sections or gravity feed lines to allow passage of hydrogen or oxygen from the lower conveying line to the upper conveying line, or vice versa. The gravity feed lines may form part of the respective hydrogen or oxygen collector separator 20, 22. For example, the gravity feed lines may be in the form of one or more vertical columns 38 that fluidly connect the lower conveying line (e.g. the collector line 36) with the upper conveying line. In such an arrangement, the hydrogen or oxygen collector separators 20, 22 may be seen as gravity or density separators. The distance between a respective conveying line and the respective coalescing device 16, 18 may be minimized so as to minimize the chance of a slug regime occurring in the lines.

In the hydrogen separator arrangement 2, hydrogen and aqueous solution can be separated along the gravity feed lines. The aqueous solution can descend by gravity in the lower conveying line via the sections, while the hydrogen can rise in the upper conveying line also via the sections. Descending flows may also include condensates of mostly water that form in the upper routing line. Hydrogen and aqueous solution can be separated directly in the lower conveying line, the upper conveying line and the gravity feed lines between them.

A similar arrangement can be provided on the Oxygen side of the facility 10, in the oxygen separator arrangement 4. An upper conveying line can be fluidly coupled to the oxygen gas-liquid separation oxygen-recovering device 22. The lower conveying line can be fluidly coupled to the oxygen coalescing device 18. One or both conveying lines can be supplied with the oxygen-aqueous solution mixture. The conveying lines can be fluidically coupled to each other by one or more sections or gravity feed lines which may form part of the oxygen collector separator 22 to allow passage of oxygen from the lower conveying line to the upper conveying line, or vice versa. Oxygen and aqueous solution can be separated along the gravity feed lines. The aqueous solution can descend by gravity in the lower conveying line via the sections, while the oxygen can rise in the upper conveying line also via the sections. Descending flows may also include condensates of mostly water that form in the upper routing line.

The arrangement of Figure 9 may include a hydrogen buffer vessel 28 and an oxygen buffer vessel 30 downstream of the coalescing devices 16, 18. For The coalescing device 16, 18 may have a liquid outlet and a gas outlet coupled to the respective buffer vessel 28, 30. In this way, the liquid and gas outlet of the coalescing device 16, 18 may be introduced into the respective buffer vessel 28, 30. The buffer vessel 28, 30 may generate a gas outlet and a liquid outlet. The liquid outlet may be recirculated to the electrolyser stacks 12 via the recycle line 26 and/or pressure balancing line 24.

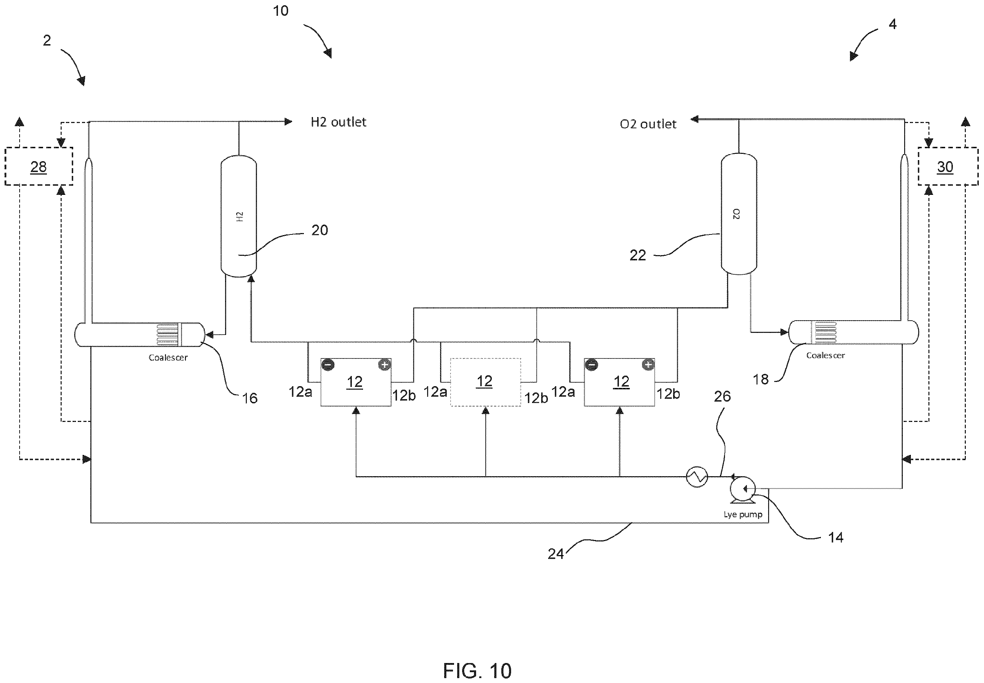

Figure 10 is a block diagram of a hydrogen production facility or system 10 according to another example. The facility shown in Figure 10 is similar to Figure 8, but does not include the pressure control valve 40 for level control in the coalescer. The coalescing device of Figure 10 may include a gas-liquid separator, for example a vertical column 38 so as to provide the coalescing functionality in the same vessel as additional separation. In the context of the facility 10 of Figures 1 to 7, the facility of Figure 10 may also include a buffer vessel 28, 30 downstream or upstream of the respective coalescing device 16, 18. In the figure, the buffer vessel 28, 30 is shown downstream of the coalescing device 16, 18. The liquid and gas outlet of the coalescing device 16, 18 may be introduced into the buffer vessel 28, 30. The buffer vessel 28, 30 may generate a gas outlet and a liquid outlet. The liquid outlet may be recirculated to the electrolyser stacks 12 via the recycle line 26 and/or pressure balancing line 24.

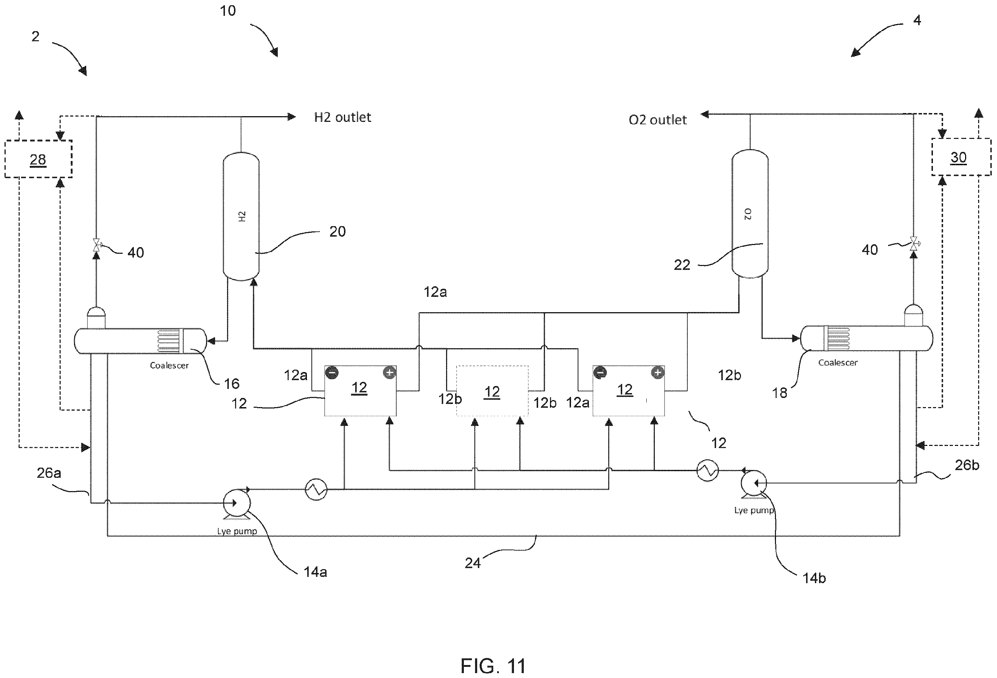

Figure 11 is a schematic of a hydrogen production facility or system 10 according to another example. The facility shown in Figure 11 is similar to Figure 8, but shows isolating both hydrogen and oxygen loops. On this scheme, pressure can be balanced upstream the electrolyser stacks 12 by any active device that is capable of doing so (e.g., valve, pump discharge pressure control, recycle, etc.). Pressure downstream the electrolyser stacks 12 can be balanced using the pressure balancing line 24 outlet the coalescing devices 16, 18 or by coupling any other devices in the system, such as an aqueous-solution-recovering device on the oxygen side to an aqueous-solution-recovering device on the hydrogen side of the system (either of which may be a coalescer), or the buffer vessel 28, 30 which is not shown.

The recycle line may extend from the hydrogen coalescing device 16 and/or from the oxygen coalescing device 18 to the plurality of electrolyser stacks 12. In Figure 11, the facility 10 includes a first recycle line 26a that extends from (e.g. directly from) the hydrogen coalescing device 16 to the plurality of electrolyser stacks 12, and a second recycle line 26b that extends from (e.g. directly from) the oxygen coalescing device 18 to the plurality of electrolyser stacks 12. In the figure, each recycle line 26a, 26b is a fluid conduit extending from the respective coalescing device 16, 18 to the plurality of electrolyser stacks 12. A pump 14a, 14b may be provided in the or each fluid conduit to direct electrolyte to the electrolyser stacks 12. In the figure, each recycle line 26a, 26b enters the respective electrolyser stack 12 separately. Such an arrangement may reduce any mixture of hydrogen and oxygen in the facility 10 by keeping the recycle lines 26a, 26b separate. In alternative arrangements, but it will be appreciated that the lines 26a, 26b may be combined upstream of the electrolyser stacks 12 or may each enter different side of the electrolyser stacks 12.

In the context of the facility of Figures 1 to 7, the buffer vessels 28, 30 may be provided downstream of the coalescing devices 16, 18. The first recycle line 26a may extend from the liquid outlet of the hydrogen buffer vessel 28 to the electrolyser stacks 12, and the second recycle line 26b may extend from the liquid outlet of the oxygen buffer vessel 30 to the electrolyser stacks 12. The buffer vessels 28, 30 may be provided upstream or downstream of the coalescing devices 16, 18.

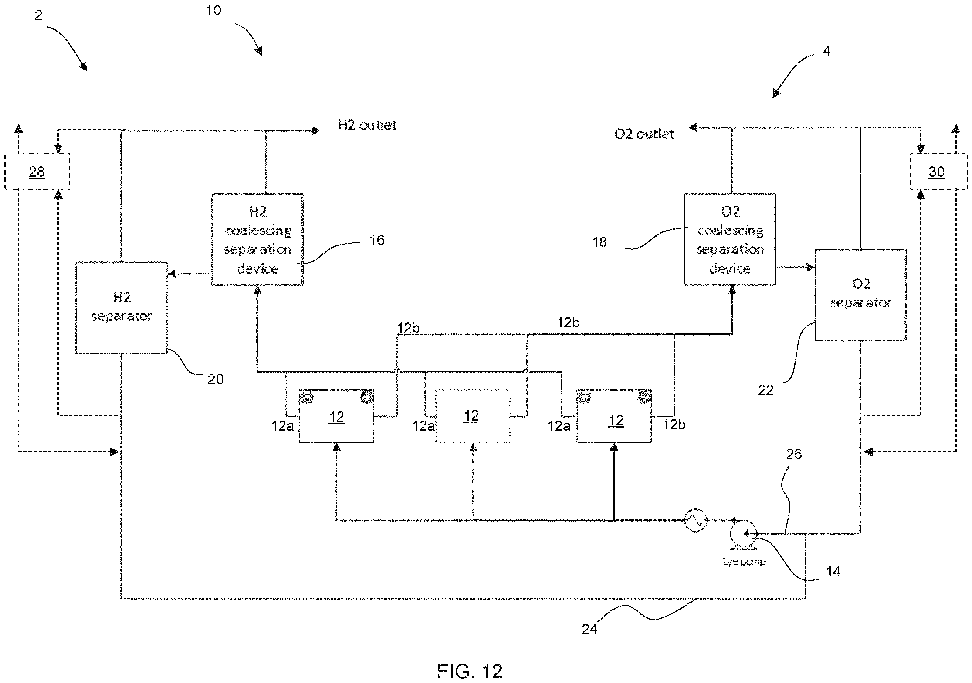

Figure 12 is a schematic of a hydrogen production facility or system 10 according to another example. The facility shown in Figure 12 is similar to Figure 8. As can be seen, in the hydrogen separator arrangement 2, the hydrogen coalescing device 16 may be positioned upstream to the first stage hydrogen collector separator 20. Additionally or alternatively, in the oxygen separator arrangement 4, the oxygen coalescing device 18 may be positioned upstream to the first stage oxygen collector separator 22. In some arrangements, the upstream coalescing device 16, 18 may be integrated with the first stage collector separator 20, 22 and a further separator may be provided downstream.

In the context of the facility of Figures 1 to 7, the hydrogen buffer vessel 28 may be provided downstream of the hydrogen collector separator 20 and the oxygen buffer vessel 30 may be provided downstream of the oxygen collector separator 22. In arrangements in which the upstream coalescing device 16, 18 is integrated with the first stage collector separator 20, 22, the buffer vessels 28, 30 may be provided downstream of the integrated coalescing devices 16, 18 and collector separators 20, 22. The buffer vessel 28, 30 may generate a gas outlet and a liquid outlet. The liquid outlet which may be recirculated to the electrolyser stacks 12 via the recycle line 26 and/or pressure balancing line 24.

It will be appreciated that any elements of the facilities indicated in Figures 1 to 12 may be implemented in combination with one another.

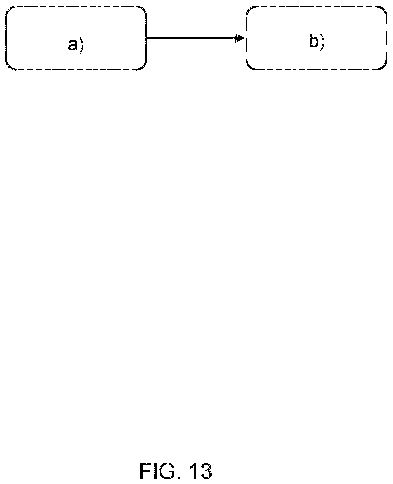

A method is illustrated in Figure 13 as a flow chart. The method includes the following steps:
a) controlling a liquid level in a plurality of first stage hydrogen collector separators 20 by:
b) using a downstream hydrogen buffer vessel fluidly coupled to the plurality of first stage hydrogen collector separators.

The method may include generating a hydrogen-aqueous solution mixture using a plurality of electrolyser stacks 12 to electrolyze water using an electrolyte. The method also includes producing a flow of hydrogen from the hydrogen-aqueous solution mixture using a hydrogen separator arrangement 2. The hydrogen separator arrangement 2 includes the plurality of first stage hydrogen collector separators 20 that are fluidly coupled to a respective sub-set 48 of the plurality of electrolyser stacks 12. The method may include, producing, by an oxygen separator arrangement 4, a flow of oxygen from an oxygen-aqueous solution mixture from the electrolyser stack 12. A similar method may be applied to the oxygen side of the process. It will be appreciated that the apparatus referred to in the method may include any elements or combinations thereof discussed in relation to Figures 1 to 12.

The foregoing description of the disclosure, including illustrated aspects and examples has been presented only for the purpose of illustration and description and is not intended to be exhaustive or to limit the disclosure to the precise forms disclosed. Numerous modifications, adaptations, and uses thereof will be apparent to those skilled in the art without departing from the scope of this disclosure. Aspects and features from each disclosed example may be combined with any other example.

## Claims

1. A hydrogen production facility comprising:
a plurality of electrolyser stacks arranged for electrolyzing water using an electrolyte and for generating at least a hydrogen-aqueous solution mixture; and
a hydrogen separator arrangement for producing a flow of hydrogen from the hydrogen-aqueous solution mixture;
wherein the hydrogen separator arrangement comprises a plurality of first stage hydrogen collector separators, the first stage hydrogen collector separators being fluidly coupled to a respective sub-set of the plurality of electrolyser stacks; and
wherein the plurality of first stage hydrogen collector separators are fluidly coupled to a downstream hydrogen buffer vessel.

2. The hydrogen production facility of claim 1, wherein one or more of the plurality of first stage hydrogen collector separators comprises a gas outlet fluidly coupled to the hydrogen buffer vessel via a gas transfer pipe and a liquid outlet fluidly coupled to the buffer vessel via a liquid transfer pipe.

3. The hydrogen production facility of claim 1 or claim 2, wherein the hydrogen buffer vessel is arranged relative to the plurality of first stage hydrogen collector separators such that during operation of the hydrogen production facility, a gas-liquid interface level in the hydrogen buffer vessel is substantially the same as a gas-liquid interface level in the plurality of first stage hydrogen collector separators.

4. The hydrogen production facility of claim 3, wherein the hydrogen buffer vessel is arranged and/or positioned to maintain the gas-liquid interface level within a vertical height of the plurality of first stage hydrogen collector separators.

5. The hydrogen production facility of any preceding claim, wherein one or more of the plurality of first stage hydrogen collector separators comprises a collector line fluidly coupled with an outlet of one or more of the respective sub-set of the plurality of electrolyser stacks.

6. The hydrogen production facility of any preceding claim, wherein one or more of the plurality of first stage hydrogen collector separators comprises a gas-liquid separation device; wherein one or more of the gas-liquid separation devices are optionally configured as a gravity separator.

7. The hydrogen production facility of any preceding claim, wherein the hydrogen separator arrangement comprises one or more hydrogen coalescing devices.

8. The hydrogen production facility of claim 7, wherein one or more hydrogen coalescing devices is/are positioned upstream of at least one of the first stage hydrogen collector separators between the plurality of electrolyser stacks and the plurality of first stage hydrogen collector separators and/or wherein one or more hydrogen coalescing devices are positioned downstream of the first stage hydrogen collector separators between the plurality of first stage hydrogen collector separators and the hydrogen buffer vessel and/or wherein one or more hydrogen coalescing devices are positioned downstream of the hydrogen buffer vessel.

9. The hydrogen production facility of claim 7 or claim 8, wherein one or more hydrogen coalescing devices are integrated with at least one of the plurality of first stage hydrogen collector separators.

10. The hydrogen production facility of claim 9, wherein one or more hydrogen coalescing devices are provided adjacent to an external wall of the respective first stage hydrogen collector separator.

11. The hydrogen production facility of any preceding claim, wherein the hydrogen buffer vessel comprises a gas-liquid separation device and/or one or more hydrogen coalescing devices.

12. The hydrogen production facility of any of claims 7 to 11, wherein the one or more hydrogen coalescing devices is/are at least one of: a membrane-type coalescer, an ultrasonic coalescer, or a centrifugal coalescer.

13. The hydrogen production facility of any preceding claim, wherein the plurality of electrolyser stacks are further configured to generate an oxygen-aqueous solution mixture, and wherein the hydrogen production facility further comprises:
an oxygen separator arrangement for producing a flow of hydrogen from the oxygen-aqueous solution mixture;
wherein the oxygen separator arrangement comprises a plurality of first stage oxygen collector separators, the first stage oxygen collector separators being fluidly coupled to a respective sub-set of the plurality of electrolyser stacks;
wherein the plurality of first stage oxygen collector separators are fluidly coupled to a downstream oxygen buffer vessel.

14. The hydrogen production facility of claim 13, wherein the hydrogen separator arrangement and the oxygen separator arrangement are coupled using a pressure balancing line to balance pressure between the hydrogen separator arrangement and the oxygen separator arrangement, wherein the pressure balancing line optionally extends between the hydrogen buffer vessel and the oxygen buffer vessel.

15. A method comprising:
generating a hydrogen-aqueous solution mixture using a plurality of electrolyser stacks to electrolyze water using an electrolyte; and
producing a flow of hydrogen from the hydrogen-aqueous solution mixture using a hydrogen separator arrangement;
wherein the hydrogen separator arrangement comprises a plurality of first stage hydrogen collector separators, the first stage hydrogen collector separators being fluidly coupled to a respective sub-set of the plurality of electrolyser stacks; and
wherein the method further comprises controlling a liquid level in the plurality of first stage hydrogen collector separators using a downstream hydrogen buffer vessel fluidly coupled to the plurality of first stage hydrogen collector separators.
